# EUROPÄISCHE PATENTSCHRIFT

(11) **EP 3 679 357 B1**
(45) Veröffentlichungstag und Bekanntmachung des Hinweises auf die Patenterteilung: **09.03.2022**
(21) Anmeldenummer: 18766228.3
(22) Anmeldetag: 06.09.2018
(51) Int. Cl.: G01N 21/90, G01N 21/93

(54) **INSPEKTIONSVORRICHTUNG MIT OPTISCHEM WASSERZEICHEN**
INSPECTION DEVICE WITH OPTICAL WATERMARK
DISPOSITIF D'INSPECTION UTILISANT UN FILIGRANE OPTIQUE

(30) Priorität: 07.09.2017 DE 102017008383
(43) Veröffentlichungstag der Anmeldung: 15.07.2020
(73) Patentinhaber: Heuft Systemtechnik GmbH, 56659 Burgbrohl (DE)
(72) Erfinder: HEUFT, Bernhard, 56659 Burgbrohl (DE); POLSTER, Wolfgang, 56626 Andernach (DE); UNGER, Michael, 53489 Sinzig (DE)
(74) Vertreter: Gritschneder, Sebastian
(86) Internationale Anmeldenummer: PCT/EP2018/074067
(87) Internationale Veröffentlichungsnummer: WO 2019/048577

(56) Entgegenhaltungen:
- EP-A1- 2 538 393
- DE-A1- 19 646 678
- DE-A1- 19 646 694
- DE-A1-102010 043 632

## Beschreibung

Die Erfindung betrifft eine Vorrichtung zur Inspektion von Behältern auf Verunreinigungen. Die Vorrichtung umfasst eine Strahlungsquelle, wobei die Strahlungsquelle ausgebildet ist Strahlung zu emittieren, die einen zu untersuchenden Behälter durchstrahlt. Die Vorrichtung umfasst ferner eine Detektionseinrichtung, welche ausgebildet ist die Strahlung zu detektieren, welche von der Strahlungsquelle emittiert wurde und den Behälter durchstrahlt hat. Die Vorrichtung umfasst auch eine Auswerteeinrichtung, die ausgebildet ist, die von der Detektionseinrichtung detektierte Strahlung auszuwerten.

Die vorliegende Erfindung ist insbesondere zum Einsatz in automatischen Abfüllanlagen bestimmt, in denen die Behälter mit hohen Geschwindigkeiten transportiert werden. Insbesondere ist die Erfindung zur Inspektion von leeren Behältern bestimmt. In automatischen Abfüllanlagen werden leere Behälter vor der Befüllung auf mögliche Verunreinigungen oder Fremdkörper untersucht. Herkömmlicherweise werden die Behälter hierzu durch eine Inspektionseinrichtung geführt, die eine Lichtquelle für sichtbares Licht und eine Halbleiterkamera umfasst. Die Behälter werden dabei durchleuchtet und aus unterschiedlichen Blickwinkeln inspiziert. Bei der Inspektion werden Helligkeits-, Farb- oder Kontrastunterschiede festgestellt. Vorliegende Unterschiede werden als Verunreinigungen oder Verschmutzungen des Behälters identifiziert und der Behälter wird hierauf folgend ausgesondert. Derartig ausgesonderte Behälter können einer Reinigungsanlage zugeführt werden oder recycelt werden.

Neben den zu untersuchenden Behältern können auch optische Komponenten der Inspektionsvorrichtung verunreinigt sein oder Störungen aufweisen. Insbesondere können optische Komponenten der Inspektionsvorrichtung beschlagen. Auch andere Verunreinigungen wie z. B. Ölfilme oder Putzstreifen treten bei optischen Komponenten wie Schutzscheiben, Spiegeln und Objektiven auf. Diese Verunreinigungen weisen eine Tiefpasscharakteristik auf und verändern die Bildhelligkeit im Wesentlichen nicht. Sie wirken sich lediglich als Unschärfe im Bild aus und können Verunreinigungen auf den Behältern für die Detektionseinrichtung unsichtbar werden lassen. Nach dem Stand der Technik erfolgt die Detektion solcher Verschmutzungen durch wiederholte Tests mit speziell präparierten Analyseprodukten, z. B. Analysebehältern, wie etwa in DE 196 46 694 offenbart, oder durch zusätzliche Bildaufnahmen mit speziellen Beleuchtungsmustern während Produktlücken oder durch extra dafür geschaffene Produktlücken.

Alternativ werden Verschmutzungen von optischen Komponenten der Inspektionsvorrichtung dadurch detektiert, dass signifikante Änderungen der Varianzen von Strukturen über die Zeit ermittelt werden.

Dadurch ist die Detektion dieser Fehler nur auf Bildbereiche beschränkt, die über starke Kontraste verfügen, z. B. Behälterränder, Bereiche mit Glasemblemen oder Aufdrucken. Bereiche, in denen typischerweise keine hohen Kontraste zu erwarten sind, können auf diese Weise nicht überprüft werden.

DE 10 2010 043 632 offenbart die Überprüfung einer Inspektionsvorrichtung mittels einer charakteristischen Teststrahlung, die zwischen der Inspektion der einzelnen Behälter eingesetzt wird oder auf einem Produkt eine temporäre Markierung erzeugt um ein fehlerhaftes Produkt zu simulieren.

In DE 196 46 678 wird die Zuverlässigkeit eines Prüfgerätes überprüft, indem über einen längeren Zeitraum aus Merkmalsignalen mehrerer Gegenstände, ein Testsignal abgeleitet wird, welches mit einem Referenzwert verglichen wird.

Der Erfindung liegt daher die Aufgabe zugrunde, eine Inspektionsvorrichtung für Behälter derart weiterzubilden, dass Verunreinigungen von optischen Komponenten der Inspektionsvorrichtung auf einfache Weise detektiert werden können.

Zur Lösung dieser Aufgabe wird eine Vorrichtung zur Inspektion von Behältern auf Verunreinigungen vorgeschlagen, die eine Strahlungsquelle umfasst. Die Strahlungsquelle ist ausgebildet, Strahlung zu emittieren, die einen zu untersuchenden Behälter durchstrahlt. Die Vorrichtung weist ferner eine Detektionseinrichtung auf, welche ausgebildet ist die Strahlung zu detektieren, welche von der Strahlungsquelle emittiert wurde und den Behälter durchstrahlt hat. Die Vorrichtung weist auch eine Auswerteeinrichtung auf, die ausgebildet ist die von der Detektionseinrichtung detektierte Strahlung auszuwerten. Im optischen Weg zwischen der Strahlungsquelle und der Detektionseinrichtung ist ein Identifikationselement angeordnet, welches ein optisches Wasserzeichen aufweist. Die Auswerteeinrichtung wertet das Wasserzeichen in der von der Detektionseinrichtung detektierten Aufnahme aus.

Das optische Wasserzeichen im optischen Weg zwischen Strahlungsquelle und Detektionseinrichtung beeinflusst nicht oder nur geringfügig die Untersuchung der Behälter auf Verunreinigungen. Allerdings ermöglicht das optische Wasserzeichen eine Überprüfung der optischen Komponenten der Inspektionsvorrichtung. Bei der Auswertung der von der Detektionseinrichtung detektierten Aufnahmen wird von der Auswerteeinrichtung das optische Wasserzeichen überprüft. Falls das detektierte Wasserzeichen bei aufeinanderfolgenden Aufnahmen signifikant von dem tatsächlichen optischen Wasserzeichen abweicht, welches sich im Strahlengang zwischen Strahlungsquelle und Detektionseinrichtung befindet, wird von der Auswerteeinrichtung eine Verunreinigung oder Störung der optischen Komponenten der Inspektionsvorrichtung erkannt.

Das Identifikationselement, welches das optische Wasserzeichen aufweist, ist vorzugsweise zwischen der Strahlungsquelle und dem zu untersuchenden Behälter angeordnet. Hierdurch kann eine Identifizierung von Störungen oder Verunreinigungen der optischen Komponenten gewährleistet werden, welche sich zwischen dem Identifikationselement und der Detektionseinrichtung befinden. Darüber hinaus können in diesem Fall Verunreinigungen des Behälters detektiert werden, da diese zu einer Störung des Wasserzeichens führen können.

Alternativ kann das Identifikationselement, welches das optische Wasserzeichen aufweist, zwischen dem zu untersuchenden Behälter und der Detektionseinrichtung angeordnet werden. Hierdurch wird ermöglicht, Störungen oder Verunreinigungen in den optischen Komponenten zu detektieren, welche sich ausschließlich zwischen dem Identifikationselement und der Detektionseinrichtung befinden. Verunreinigungen des Behälters werden aber auf diese Weise ignoriert.

Darüber hinaus können mehrere Identifikationselemente mit unterschiedlichen optischen Wasserzeichen im optischen Weg zwischen der Strahlungsquelle und der Detektionseinrichtung platziert werden. Diese mehreren Identifikationselemente können im optischen Weg nach den optischen Komponenten der Inspektionsvorrichtung angeordnet werden, welche auf Störungen und Verunreinigungen untersucht werden sollen.

Beispielsweise kann die Detektionseinrichtung als Halbleiterkamera mit Objektiv und Umlenkspiegel als Kamerakasten ausgebildet sein. In diesem Fall ist eine Reinigung des Schutzglases der Halbleiterkamera unproblematisch möglich. Eine Störung oder Verunreinigung innerhalb des Kamerakastens allerdings stellt eine signifikante Störung dar. In diesem Fall kann ein erstes Identifikationselement, aufweisend ein erstes optisches Wasserzeichen im optischen Weg, vor dem Schutzglas des Kamerakastens angeordnet werden und ein zweites Identifikationselement, aufweisend ein zweites optisches Wasserzeichen im optischen Weg, hinter dem Schutzglas des Kamerakastens angeordnet werden. Falls von der Auswerteeinrichtung festgestellt wird, dass das zweite optische Wasserzeichen korrekt von der Detektionseinrichtung detektiert wird, das erste Wasserzeichen aber nicht, kann auf eine Verschmutzung oder Störung des Schutzglases des Kamerakastens rückgeschlossen werden. Hieraufhin kann die Auswerteeinrichtung ein Signal ausgeben, dass das Schutzglas des Kamerakastens gereinigt werden soll. Falls demgegenüber sowohl das erste Wasserzeichen wie auch das zweite Wasserzeichen nicht korrekt von der Detektionseinrichtung erkannt werden, kann von der Auswerteeinrichtung auf eine Verschmutzung oder Störung innerhalb des Kamerakastens geschlossen werden.

Entsprechend können geeignete Komponenten im optischen Weg zwischen der Strahlungsquelle und der Detektionseinrichtung mit Identifikationselementen und unterschiedlichen optischen Wasserzeichen versehen werden, so dass von der Auswerteeinrichtung im Falle einer Verschmutzung oder Störung genau ermittelt werden kann, welche optische Komponente der Inspektionsvorrichtung verschmutzt ist bzw. gestört ist.

Das optische Wasserzeichen ist derart ausgebildet, dass die Detektion von Verunreinigungen der Behälter durch das Wasserzeichen nicht oder nur geringfügig gestört wird. Hierzu ist das Wasserzeichen beispielsweise durch feine Punkte, Linien oder Strukturen gebildet, die sich von Verunreinigungen der Behälter unterscheiden. Vorzugsweise kann das Wasserzeichen mit dem menschlichen Auge nicht oder nur schwer erkannt werden. Das Wasserzeichen kann Linien oder Punktmuster aufweisen.

Vorzugsweise wird das optische Wasserzeichen durch das im optischen Wasserzeichen vorhandene Frequenzspektrum definiert und gewählt. Vorzugsweise werden in dem Frequenzspektrum des Wasserzeichens geeignete Frequenzen innerhalb eines festen Frequenzbandes gewählt. Anschließend kann das Frequenzspektrum des derartig erzeugten Wasserzeichens mittels bekannter Fourier-Transformation oder einer anderen geeigneten orthogonalen Transformation aus dem Frequenzraum in den Ortsraum transformiert werden. Hierdurch ergibt sich das Bild im Ortsraum des optischen Wasserzeichens. Dieses Bild wird dann auf das Identifikationselement aufgebracht und im optischen Weg zwischen der Strahlungsquelle und der Detektionseinrichtung der Inspektionsvorrichtung platziert. Dadurch wird der Strahlung der Strahlungsquelle das Wasserzeichen aufgeprägt.

Zur Auswertung des optischen Wasserzeichens in der von der Detektionseinrichtung detektierten Aufnahme durch die Auswerteeinrichtung wird vorzugsweise die von der Detektionseinrichtung detektierte Aufnahme vom Ortsraum in den Frequenzraum transformiert. Hierbei kommt vorzugsweise wiederum eine Fourier-Transformation oder eine andere geeignete orthogonale Transformation zum Einsatz. Die Auswerteeinrichtung überprüft nun, ob das Frequenzspektrum des optischen Wasserzeichens in der von der Detektionseinrichtung detektierten Aufnahme vorhanden ist, oder ob das Frequenzspektrum gestört ist. Falls das Frequenzspektrum im Wesentlichen in der Aufnahme vorhanden ist, d. h. nicht oder nur geringfügig gestört ist, detektiert die Auswerteeinrichtung, dass keine Störung oder Verschmutzung von optischen Komponenten der Inspektionsvorrichtung vorliegt und auch keine Verunreinigung des zu untersuchenden Behälters vorliegt. Falls, andererseits, das in der von der Detektionseinrichtung detektierten Aufnahme vorliegende Frequenzspektrum des ursprünglichen Wasserzeichens stark verzerrt oder gestört ist, detektiert die Auswerteeinrichtung eine Verunreinigung des zu untersuchenden Behälters. Falls das Frequenzspektrum in aufeinanderfolgenden Aufnahmen stark verzerrt oder gestört ist, detektiert die Auswerteeinrichtung eine Verschmutzung oder Störung einer optischen Komponente der Inspektionsvorrichtung. Falls, wie oben beschrieben, mehrere unterschiedliche optische Wasserzeichen zum Einsatz kommen, detektiert die Auswerteeinrichtung ferner, welche der optischen Komponenten der Inspektionsvorrichtung von einer Verunreinigung oder Störung betroffen ist.

Das Frequenzspektrum des optischen Wasserzeichens ist derart gewählt, dass alle Frequenzen im Frequenzspektrum des Wasserzeichens noch von der Detektionseinrichtung detektiert werden können. Auch wird die obere Grenzfrequenz so gewählt, dass durch die optischen Komponenten der Inspektionsvorrichtung, den zu untersuchenden Behälter sowie durch die Auswertung in der Auswerteeinrichtung keine Artefakte erzeugt werden. Die niedrigste Frequenz im Frequenzspektrum des optischen Wasserzeichens wird so gewählt, dass die Detektion von Verunreinigungen der zu untersuchenden Behälter nicht oder nur minimal gestört wird. In anderen Worten wird das Frequenzspektrum des optischen Wasserzeichens so gewählt, dass die Detektion von Verunreinigungen von zu untersuchenden Behältern nicht signifikant gestört wird, die Frequenzen des optischen Wasserzeichens aber von der Detektionseinrichtung detektiert werden können. Bei gleichzeitiger Verwendung mehrerer Wasserzeichen ergänzen sich diese vorzugsweise spektral und teilen sich daher keine gemeinsamen Frequenzen.

Das Frequenzspektrum des optischen Wasserzeichens ist ferner derart gewählt, dass diffuse Verunreinigungen von optischen Komponenten der Inspektionsvorrichtung im optischen Weg zwischen der Strahlungsquelle und der Detektionseinrichtung zu einer Störung des optischen Wasserzeichens führen. Somit wird gewährleistet, dass z.B. Ölfilme, Putzstreifen, Beschlag etc. auf optischen Komponenten der Inspektionsvorrichtung erkannt werden können.

Die Strahlungsquelle ist vorzugsweise eine elektro-magnetische Strahlungsquelle, z. B. eine Strahlungsquelle für Licht im sichtbaren Bereich. Die Strahlungsquelle kann ferner ausgebildet sein UV- oder Infrarotlicht oder eine Kombination hiervon zu emittieren. Infrarotstrahlung kann vorteilhafterweise bei farbigen Behältern, insbesondere bei braunen Glasflaschen, zum Einsatz kommen.

Die Strahlungsquelle kann gepulst betrieben werden und so gesteuert werden, dass die Strahlungsimpulse nur dann abgegeben werden, wenn sich ein zu untersuchender Behälter vor der Strahlungsquelle befindet. Alternativ kann die Strahlungsquelle kontinuierlich betrieben werden.

Die vorliegende Erfindung kann zur Inspektion von Behältern aus beliebigem für die Strahlung der Strahlungsquelle im Wesentlichen transparentem Material eingesetzt werden. Besonders vorteilhaft lässt sich die Erfindung bei Behältern aus Glas oder transparenten Kunststoffen wie z. B. PET verwenden. Insbesondere ist die Erfindung zur Inspektion von Glasflaschen in der Getränkeindustrie anwendbar.

Die Detektionseinrichtung ist vorzugsweise eine handelsübliche Farbkamera, insbesondere eine Halbleiterkamera. Ebenso können Infrarot- und UV-Kameras eingesetzt werden. Um Bewegungsunschärfe zu vermeiden bzw. zu reduzieren, können Shutter-Kameras mit kurzen Verschlusszeiten eingesetzt werden. Dies ist besonders von Vorteil, wenn die Strahlungsquelle kontinuierlich betrieben wird.

Die Erfindung betrifft ferner ein Verfahren zur Inspektion von Behältern auf Verunreinigungen, wobei das Verfahren die folgenden Verfahrensschritte umfasst:
- Bereitstellen einer Strahlungsquelle, wobei die Strahlungsquelle ausgebildet ist Strahlung zu emittieren, die einen zu untersuchenden Behälter durchstrahlt,
- Bereitstellen einer Detektionseinrichtung, welche ausgebildet ist, die Strahlung zu detektieren, welche von der Strahlungsquelle emittiert wurde und den Behälter durchstrahlt hat,
- Bereitstellen einer Auswerteeinrichtung, die ausgebildet ist, die von der Detektionseinrichtung detektierte Strahlung auszuwerten, und
- Anordnen, im optischen Weg zwischen der Strahlungsquelle und der Detektionseinrichtung, eines Identifikationselements, aufweisend ein optisches Wasserzeichen,
- Auswerten, durch die Auswerteeinrichtung, des Wasserzeichens in der von der Detektionseinrichtung detektierten Aufnahme.

Beim Verfahrensschritt des Auswertens schließt die Auswerteeinrichtung vorzugsweise durch ein frequenzanalytisches Verfahren aus einer Veränderung des Frequenzspektrums des Wasserzeichens in der von der Detektionseinrichtung detektierten Aufnahme auf eine Verunreinigung oder Störung im optischen Weg zwischen der Strahlungsquelle und der Detektionseinrichtung. Die Auswerteeinrichtung detektiert hierbei eine Verunreinigung oder Störung, falls im Frequenzspektrum des Wasserzeichens eine signifikante Veränderung auftritt.

Typischerweise wird von jedem zu untersuchenden Behälter von der Detektionseinrichtung eine Aufnahme detektiert. Falls die Auswerteeinrichtung bei einer einzelnen Aufnahme im optischen Weg zwischen der Strahlungsquelle und der Detektionseinrichtung eine Verunreinigung oder Störung detektiert, wird davon ausgegangen, dass der Behälter verunreinigt ist. Zum Beispiel kann der Behälter beschlagen sein oder mit Rost kontaminiert sein, so dass eine diffuse Verunreinigung des Behälters vorliegt. Falls demgegenüber bei mehreren aufeinander folgenden detektierten Aufnahmen der Detektionseinrichtung eine ortsfeste Störung oder Verunreinigung durch die Auswerteeinrichtung detektiert wird, detektiert die Auswerteeinrichtung eine Verunreinigung oder Störung einer optischen Komponente der Inspektionsvorrichtung im optischen Weg zwischen Identifikationselement und Detektionseinrichtung. In diesem Fall ist es unwahrscheinlich, dass eine Vielzahl von Behältern diffuse Verunreinigungen an derselben Stelle aufweisen.

Um die Inspektionsgenauigkeit zu erhöhen und einer Störung einen Ort zuzuweisen, zerlegt die Auswerteeinrichtung vorzugsweise die von der Detektionseinrichtung detektierte Aufnahme in eine Mehrzahl von Teilbereichen, z. B. mit jeweils 64x64 oder 32x32 Bildpunkten. Diese Teilbereiche der Gesamtaufnahme werden jeweils von der Auswerteeinrichtung vom Ortsraum in den Frequenzraum transformiert und das erhaltene Frequenzspektrum der einzelnen Teilbereiche mit dem Frequenzspektrum des optischen Wasserzeichens verglichen. Im störungsfreien Fall lässt sich in jedem Teilbereich der Aufnahme das ursprüngliche Frequenzmuster des optischen Wasserzeichens beobachten, wobei das ursprüngliche Frequenzmuster aufgrund des Behälters systematisch verzerrt sein darf. Eine stärkere Verzerrung bzw. Dämpfung des Frequenzspektrums im Vergleich mit dem ursprünglichen Frequenzspektrum des optischen Wasserzeichens deutet auf eine Verschmutzung hin. Wie oben beschrieben, kann eine einmalige Detektion eines verzerrten oder gestörten Frequenzspektrums auf einen verschmutzten Behälter zurückgeführt werden. Werden allerdings in aufeinander folgenden Aufnahmen verzerrte oder gestörte Frequenzspektren von der Auswerteeinrichtung detektiert, wird auf eine Verunreinigung oder Störung einer optischen Komponente der Inspektionsvorrichtung im optischen Weg zwischen Strahlungsquelle und Detektionseinrichtung zurückgeschlossen.

Im Folgenden wird die vorliegende Erfindung durch die beiliegenden Zeichnungen näher beschrieben. Hierbei zeigt:
- Figur 1: eine illustrative Darstellung einer Ausführungsform der erfindungsgemäßen Inspektionsvorrichtung mit Identifikationselement,
- Figur 2: eine illustrative Darstellung einer alternativen Ausführungsform der erfindungsgemäßen Inspektionsvorrichtung mit Identifikationselement,
- Figur 3: eine illustrative Darstellung einer weiteren alternativen Ausführungsform der erfindungsgemäßen Inspektionsvorrichtung mit Identifikationselement,
- Figur 4: eine illustrative Darstellung einer weiteren alternativen Ausführungsform der erfindungsgemäßen Inspektionsvorrichtung mit Identifikationselement,
- Figur 5: ein optisches Wasserzeichen im Frequenzraum und im Ortsraum,
- Figur 6: ein von der Auswerteeinrichtung ausgewertetes Frequenzspektrum eines Teilbereichs.

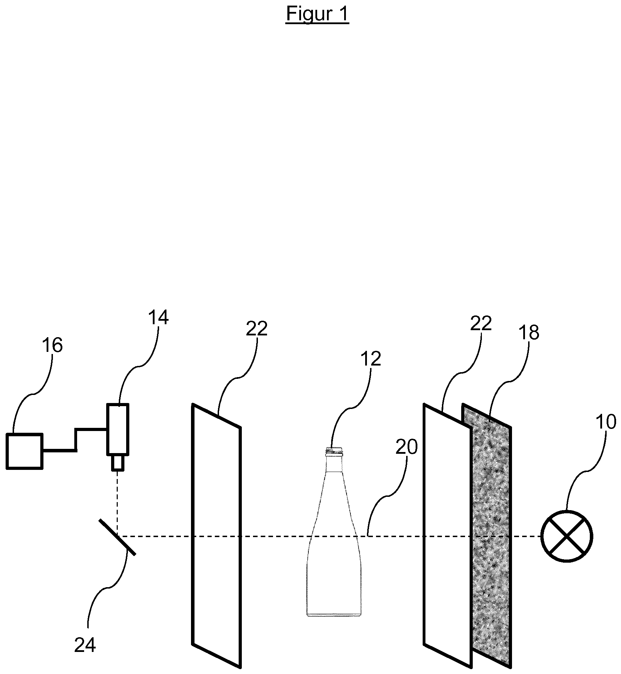

Figur 1 zeigt eine Vorrichtung zur Inspektion von Behältern auf Verunreinigungen. Die Vorrichtung weist eine Strahlungsquelle 10 auf. Die Strahlungsquelle 10 ist ausgelegt Strahlung zu emittieren. Die Strahlung durchstrahlt einen zu untersuchenden Behälter 12. Nachdem der zu untersuchende Behälter 12 von der Strahlung der Strahlungsquelle 10 durchstrahlt wurde, gelangt die Strahlung in eine Detektionseinrichtung 14. Die von der Detektionseinrichtung 14 detektierte Aufnahme wird zur weiteren Auswertung zu einer Auswerteeinrichtung 16 übertragen.

Zwischen der Strahlungsquelle 10 und dem zu untersuchenden Behälter 12 ist ein Identifikationselement 18 angeordnet, wobei das Identifikationselement 18 ein optisches Wasserzeichen aufweist.

Im optischen Weg 20 zwischen der Strahlungsquelle 10 und der Detektionseinrichtung 14 können verschiedene optische Komponenten 22, 24 der Inspektionsvorrichtung vorgesehen sein. Hierbei kann es sich um Schutzglasscheiben 22 oder Umlenkspiegel 24 handeln. Auch die Strahlungsquelle 10 sowie die Detektionseinrichtung 14 sind als optische Komponenten der Inspektionsvorrichtung anzusehen. Die zu untersuchenden Behälter 12 wie auch alle optischen Komponenten 10, 14, 22, 24 der Inspektionsvorrichtung können über Verunreinigungen verfügen. Bei den zu untersuchenden Behältern 12 werden diese Verunreinigungen auf bekannte Weise von der Detektionseinrichtung 14 detektiert und von der Auswerteeinrichtung 16 festgestellt. Demgegenüber können durch die erfindungsgemäße Vorrichtung ferner Störungen oder Verunreinigungen auf den optischen Komponenten der Inspektionsvorrichtung detektiert werden.

Hierzu ist das Identifikationselement 18 mit dem optischen Wasserzeichen vorgesehen. Das optische Wasserzeichen ist derart ausgebildet, dass die Detektion von Verunreinigungen auf dem zu untersuchenden Behälter 12 nicht oder kaum beeinträchtigt wird. Liegt jedoch eine Störung oder Verunreinigung bei einer der optischen Komponenten der Inspektionsvorrichtung vor, führt dies zu einer Veränderung des optischen Wasserzeichens bei der von der Detektionseinrichtung 14 detektierten Aufnahme. Dies kann von der Auswerteeinrichtung 16 festgestellt werden.

In dem in Figur 1 gezeigten Beispiel ist das Identifikationselement 18 mit dem optischen Wasserzeichen zwischen einem ersten Schutzglas 22 und der Strahlungsquelle 10 angeordnet. Durch das Vorsehen des Identifikationselements 18 mit dem optischen Wasserzeichen an dieser Stelle kann eine Störung oder Verunreinigung bei den Schutzgläsern 22, dem Umlenkspiegel 24 und optischen Komponenten innerhalb der Detektionseinrichtung 14 festgestellt werden. Nicht festgestellt werden können Störungen oder Verschmutzungen innerhalb der Strahlungsquelle 10.

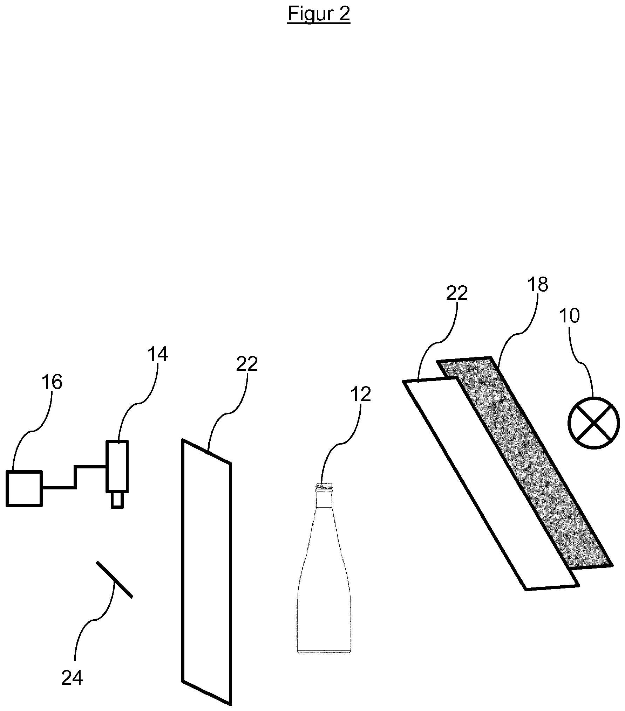

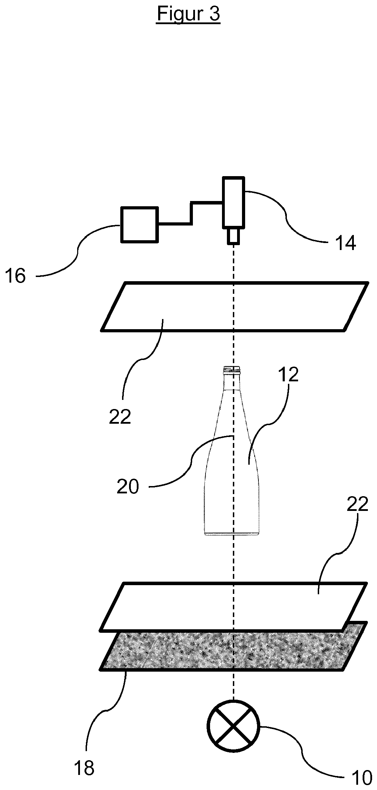

Die Figuren 2 und 3 zeigen unterschiedliche Anordnungen der optischen Komponenten der Inspektionsvorrichtung. Figur 2 zeigt eine Verkippung der Strahlungsquelle bezüglich des in Figur 1 gezeigten optischen Weges. Figur 3 zeigt eine Bodeninspektion.

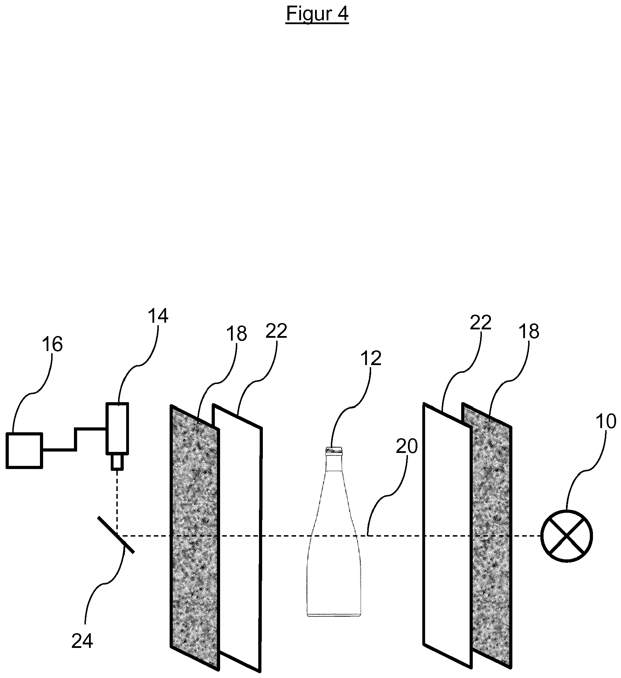

Figur 4 zeigt eine Ausführungsform, bei der zwei Identifikationselemente 18 mit jeweiligen unterschiedlichen optischen Wasserzeichen zum Einsatz kommen. Hierdurch kann eine etwaige vorliegende Störung oder Verschmutzung von optischen Komponenten der Inspektionsvorrichtung den einzelnen optischen Komponenten zugeordnet werden. Falls beispielsweise das in Figur 4 gezeigte rechte Schutzglas 22 beschlagen ist, wird von der Auswerteeinrichtung 16 die von der Detektionseinrichtung 14 detektierte Aufnahme dahingehend ausgewertet, dass das optische Wasserzeichen, welches das in Figur 4 gezeigte rechte Identifikationselement 18 aufweist, gestört ist. Demgegenüber wird das optische Wasserzeichen, welches das in Figur 4 gezeigte linke Identifikationselement 18 aufweist, nicht gestört sein. Je nachdem, welche optischen Komponenten der Identifikationsvorrichtung auf das Vorliegen von Störungen und Verunreinigungen untersucht werden sollen, können separate Identifikationselemente mit unterschiedlichen optischen Wasserzeichen vor und/oder hinter diesen optischen Komponenten platziert werden.

Die Identifikationselemente 18 können als Folien auf die optischen Komponenten der Identifikationsvorrichtung aufgebracht werden oder durch andere geeignete Maßnahmen in den optischen Weg 20 zwischen der Strahlungsquelle 10 und der Detektionseinrichtung 14 eingebracht werden, beispielsweise durch Schirme.

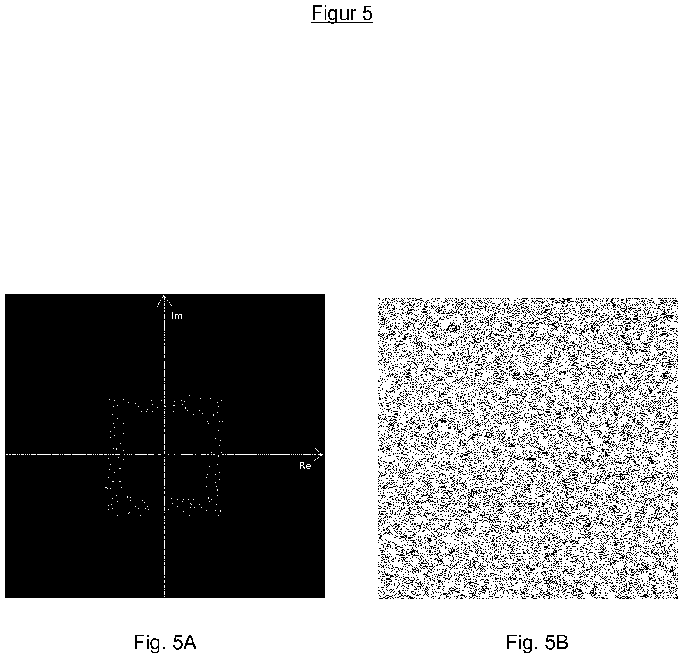

Figur 5 zeigt eine Ausführungsform eines optischen Wasserzeichens im Ortsraum, siehe Figur 5B und im Frequenzraum, siehe Figur 5A. Die Umwandlung eines optischen Wasserzeichens vom Ortsraum in den Frequenzraum und andersherum geschieht durch die bekannte Fourier-Transformation oder eine andere geeignete orthogonale Transformation. Vorzugsweise wird ein optisches Wasserzeichen ausgewählt, wie es in Figur 5A und 5B gezeigt ist. Hierbei wird ein geeignetes Frequenzspektrum erzeugt, wobei die Frequenzen so gewählt werden, dass die Frequenzen von der Detektionseinrichtung 14 detektiert werden können und gleichzeitig die Detektion von Verunreinigungen auf den zu untersuchenden Behältern 12 nicht oder nicht wesentlich stören. Figur 5A zeigt eine solche Auswahl eines geeigneten Frequenzspektrums, wobei

Figur 5A den Realteil sowie den Imaginärteil im Frequenzspektrum des so erzeugten optischen Wasserzeichens darstellt. Nach der Transformation dieses Frequenzspektrums in den Ortsraum wird ein Wasserzeichen erzeugt. In Figur 5B ist ein vergrößerter Teilausschnitt dieses optischen Wasserzeichens gezeigt. Dieses optische Wasserzeichen wird nun, wie in den Figuren 1 bis 4 gezeigt, in den optischen Weg 20 zwischen der Strahlungsquelle 10 und der Detektionseinrichtung 14 eingebracht.

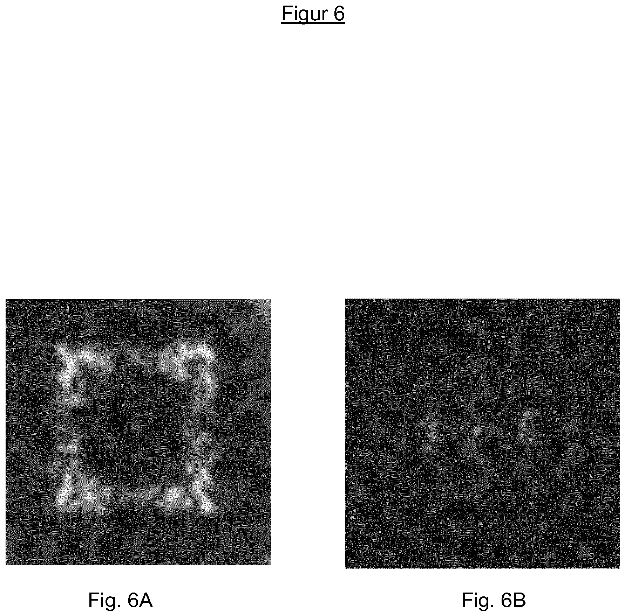

Figur 6 zeigt beispielhafte Auswertungen von den von der Detektionseinrichtung 14 detektierten Aufnahmen. Die Auswerteeinrichtung zerlegt eine von der Detektionseinrichtung 14 detektierte Aufnahme hierbei in mehrere Teilbereiche. Die Figuren 6A und 6B zeigen jeweils das Frequenzspektrum zweier solcher Teilbereiche. Figur 6A zeigt das Frequenzspektrum eines Teilbereichs, bei der das Frequenzspektrum des optischen Wasserzeichens, welches in den optischen Weg 20 zwischen der Strahlungsquelle 10 und der Detektionsvorrichtung 14 eingebracht wurde, im Wesentlichen rekonstruiert werden konnte. Bei dieser Aufnahme würde die Auswerteeinrichtung daher detektieren, dass keine Verschmutzung oder Störung im optischen Weg 20 vorhanden ist.

Die Figur 6B zeigt das Frequenzspektrum eines Teilbereichs, bei dem eine Störung oder Verunreinigung im optischen Weg 20 vorliegt. Falls eine derartige Störung oder Verunreinigung lediglich bei einer Aufnahme detektiert wird, wird von der Auswerteeinrichtung darauf geschlossen, dass ein verunreinigter Behälter 12 vorgelegen hat. Wird allerdings bei mehreren nacheinander folgenden Aufnahmen eine derartige Störung oder Verunreinigung an derselben Stelle detektiert, stellt die Auswerteeinrichtung fest, dass eine Störung oder Verunreinigung einer der optischen Komponenten der Inspektionsvorrichtung vorliegt. Wenn, wie oben beschrieben, mehrere Identifikationselemente 18 mit verschiedenen optischen Wasserzeichen zum Einsatz kommen, kann die Auswerteeinrichtung 16 in diesem Fall außerdem feststellen, welche optische Komponente der Inspektionsvorrichtung gestört bzw. verunreinigt ist.

## Patentansprüche

1. Vorrichtung zur Inspektion von Behältern (12) auf Verunreinigungen, umfassend:
- eine Strahlungsquelle (10), wobei die Strahlungsquelle (10) ausgebildet ist Strahlung zu emittieren, die einen zu untersuchenden Behälter (12) durchstrahlt,
- eine Detektionseinrichtung (14), welche ausgebildet ist die Strahlung zu detektieren, welche von der Strahlungsquelle (10) emittiert wurde und den Behälter (12) durchstrahlt hat, und
- eine Auswerteeinrichtung (16), die ausgebildet ist die von der Detektionseinrichtung (14) detektierte Strahlung auszuwerten,
wobei im optischen Weg (20) zwischen der Strahlungsquelle (10) und der Detektionseinrichtung (14) ein Identifikationselement (18), aufweisend ein optisches Wasserzeichen, angeordnet ist, wobei die Auswerteeinrichtung (16) ausgebildet ist, das Wasserzeichen in der von der Detektionseinrichtung (14) detektierten Aufnahme auszuwerten.

2. Vorrichtung nach Anspruch 1, wobei das Identifikationselement (18) zwischen der Strahlungsquelle (10) und dem zu untersuchenden Behälter (12) angeordnet ist.

3. Vorrichtung nach Anspruch 1, wobei das Identifikationselement (18) zwischen dem zu untersuchenden Behälter (12) und der Detektionseinrichtung (14) angeordnet ist.

4. Vorrichtung nach einem der vorherigen Ansprüche, wobei ein erstes Identifikationselement (18), aufweisend ein erstes optisches Wasserzeichen, im optischen Weg (20) zwischen der Strahlungsquelle (10) und dem zu untersuchenden Behälter (12) angeordnet ist, und ein zweites Identifikationselement (18), aufweisend ein zweites optisches Wasserzeichen, im optischen Weg (20) zwischen dem zu untersuchenden Behälter (12) und der Detektionseinrichtung (14) angeordnet ist.

5. Vorrichtung nach einem der vorherigen Ansprüche, wobei das optische Wasserzeichen ausgebildet ist, die Detektion von Verunreinigungen des zu untersuchenden Behälters (12) durch die Auswerteeinrichtung (16) nicht oder nur unwesentlich zu beeinflussen, und wobei das Wasserzeichen derart ausgebildet ist, dass durch die Auswerteeinrichtung (16) Verunreinigungen oder Störungen von optischen Komponenten (10, 14, 22, 24) der Inspektionsvorrichtung im optischen Weg (20) zwischen der Strahlungsquelle (10) und der Detektionseinrichtung (14) detektiert werden können.

6. Vorrichtung nach einem der vorherigen Ansprüche, wobei das Wasserzeichen Linien- oder Punktmuster aufweist.

7. Vorrichtung nach einem der vorherigen Ansprüche, wobei das Wasserzeichen im Frequenzspektrum des Wasserzeichens geeignete Frequenzen in einem festen Frequenzband aufweist.

8. Vorrichtung nach einem der vorherigen Ansprüche, wobei das Frequenzspektrum des Wasserzeichens derart gewählt ist, dass die niedrigste Frequenz im Frequenzspektrum des Wasserzeichens größer ist als die höchste zu erwartende Frequenz im Frequenzspektrum einer Verunreinigung eines zu untersuchenden Behälters (12).

9. Vorrichtung nach einem der vorherigen Ansprüche, wobei das Frequenzspektrum des Wasserzeichens derart gewählt ist, dass die höchste Frequenz im Frequenzspektrum des Wasserzeichens kleiner ist als die maximale von der Detektionseinrichtung (14) ohne Artefakte detektierbare Frequenz.

10. Vorrichtung nach einem der vorherigen Ansprüche, wobei das Frequenzspektrum des Wasserzeichens derart gewählt ist, dass das Frequenzspektrum des Wasserzeichens durch diffuse Verunreinigungen im optischen Weg (20) zwischen der Strahlungsquelle (10) und der Detektionseinrichtung (14) gedämpft oder zerstört wird.

11. Verfahren zur Inspektion von Behältern (12) auf Verunreinigungen, wobei das Verfahren die folgenden Verfahrensschritte umfasst:
- Bereitstellen einer Strahlungsquelle (10), wobei die Strahlungsquelle (10) ausgebildet ist Strahlung zu emittieren, die einen zu untersuchenden Behälter (12) durchstrah lt,
- Bereitstellen einer Detektionseinrichtung (14), welche ausgebildet ist die Strahlung zu detektieren, welche von der Strahlungsquelle (10) emittiert wurde und den Behälter (12) durchstrahlt hat,
- Bereitstellen einer Auswerteeinrichtung (16), die ausgebildet ist die von der Detektionseinrichtung (14) detektierte Strahlung auszuwerten, und
- Anordnen, im optischen Weg (20) zwischen der Strahlungsquelle (10) und der Detektionseinrichtung (14), eines Identifikationselements (18), aufweisend ein optisches Wasserzeichen,
- Auswerten, durch die Auswerteeinrichtung (16), des Wasserzeichens in der von der Detektionseinrichtung (14) detektierten Aufnahme.

12. Verfahren nach Anspruch 11, wobei, beim Verfahrensschritt des Auswertens, die Auswerteeinrichtung (16) durch ein frequenzanalytisches Verfahren aus einer Abweichung des Frequenzspektrums der von der Detektionseinrichtung (14) detektierten Aufnahme des zu untersuchenden Behälters (12) von dem Spektrum des optischen Wasserzeichens auf eine Verunreinigung oder Störung im optischen Weg (20) zwischen der Strahlungsquelle (10) und der Detektionseinrichtung (14) zurückschließt.

13. Verfahren nach Anspruch 11 oder 12, wobei, beim Verfahrensschritt des Auswertens, die Auswerteeinrichtung (16) durch ein frequenzanalytisches Verfahren aus einer Abweichung des Frequenzspektrums der von der Detektionseinrichtung (14) detektierten Aufnahme des zu untersuchenden Behälters (12) von dem Spektrum des optischen Wasserzeichens auf diffuse Verunreinigungen des Behälters (12) zurückschließt.

14. Verfahren nach einem der Ansprüche 11 bis 13, wobei, beim Verfahrensschritt des Auswertens, die Auswerteeinrichtung (16) durch ein frequenzanalytisches Verfahren aus einer Abweichung des Frequenzspektrums der von der Detektionseinrichtung (14) detektierten Aufnahme des zu untersuchenden Behälters (12) in mehreren aufeinanderfolgenden Aufnahmen von dem Spektrum des optischen Wasserzeichens auf eine Verunreinigung oder Störung von optischen Komponenten (10, 14, 22, 24) der Inspektionsvorrichtung im optischen Weg (20) zwischen der Strahlungsquelle (10) und der Detektionseinrichtung (14) zurückschließt.

15. Verfahren nach einem der Ansprüche 11 bis 14, wobei, beim Verfahrensschritt des Auswertens, die Auswerteeinrichtung (16) Teilbereiche der von der Detektionseinrichtung (14) detektierten Aufnahme auswertet, wobei die Auswerteeinrichtung (16) das Frequenzspektrum des Teilbereichs mit dem Frequenzspektrum des Wasserzeichens abgleicht, und wobei die Auswerteeinrichtung (16) bei einer Abweichung des Frequenzspektrums eines analysierten Teilbereichs auf eine Verunreinigung oder Störung im optischen Weg (20) zwischen der Strahlungsquelle (10) und der Detektionseinrichtung (14) zurückschließt.

## Claims

1. Device for inspecting containers (12) for impurities, comprising:
- a radiation source (10), the radiation source (10) being configured to emit radiation which radiates through a container (12) to be inspected,
- a detection device (14) which is configured to detect the radiation which has been emitted by the radiation source (10) and has radiated through the container (12), and
- an evaluation device (16) which is configured to evaluate the radiation detected by the detection device (14),
wherein an identification element (18) comprising an optical watermark is arranged in the optical path (20) between the radiation source (10) and the detection device (14), wherein the evaluation device (16) is configured to evaluate the watermark in the image detected by the detection device (14).

2. Device according to claim 1, wherein the identification element (18) is arranged between the radiation source (10) and the container (12) to be inspected.

3. Device according to claim 1, wherein the identification element (18) is arranged between the container (12) to be inspected and the detection device (14).

4. Device according to any one of the preceding claims, wherein a first identification element (18) comprising a first optical watermark is arranged in the optical path (20) between the radiation source (10) and the container (12) to be inspected, and a second identification element (18) comprising a second optical watermark is arranged in the optical path (20) between the container (12) to be inspected and the detection device (14).

5. Device according to one of the preceding claims, wherein the optical watermark is configured in such a way that the detection of impurities of the container (12) to be inspected by the evaluation device (16) is not or only insignificantly influenced, and wherein the watermark is configured in such a way that impurities or faults of optical components (10, 14, 22, 24) of the inspection device in the optical path (20) between the radiation source (10) and the detection device (14) can be detected by the evaluation device (16).

6. Device according to any one of the preceding claims, wherein the watermark comprises line or dot patterns.

7. Device according to any one of the preceding claims, wherein the watermark has suitable frequencies in a fixed frequency band in the frequency spectrum of the watermark.

8. Device according to any one of the preceding claims, wherein the frequency spectrum of the watermark is selected such that the lowest frequency in the frequency spectrum of the watermark is greater than the highest frequency to be expected in the frequency spectrum of an impurity of a container (12) to be inspected.

9. Device according to any one of the preceding claims, wherein the frequency spectrum of the watermark is selected such that the highest frequency in the frequency spectrum of the watermark is smaller than the maximum frequency detectable by the detection device (14) without artefacts.

10. Device according to any one of the preceding claims, wherein the frequency spectrum of the watermark is selected such that the frequency spectrum of the watermark is attenuated or destroyed by diffuse impurities in the optical path (20) between the radiation source (10) and the detection device (14).

11. A method of inspecting containers (12) for impurities, the method comprising the steps of:
- providing a radiation source (10), the radiation source (10) being configured to emit radiation which radiates through a container (12) to be inspected,
- providing a detection device (14) which is configured to detect the radiation which has been emitted by the radiation source (10) and has radiated through the container (12),
- providing an evaluation device (16) which is configured to evaluate the radiation detected by the detection device (14), and
- arranging, in the optical path (20) between the radiation source (10) and the detection device (14), an identification element (18) comprising an optical watermark,
- evaluating, by the evaluation device (16), the watermark in the image detected by the detection device (14).

12. Method according to claim 11, wherein, in the method step of evaluation, the evaluation device (16) concludes, by means of a frequency-analytical method, from a deviation of the frequency spectrum of the image of the container (12) to be inspected detected by the detection device (14) from the spectrum of the optical water mark, that there is an impurity or fault in the optical path (20) between the radiation source (10) and the detection device (14).

13. Method according to claim 11 or 12, wherein, in the method step of evaluation, the evaluation device (16) concludes by means of a frequency-analytical method from a deviation of the frequency spectrum of the image of the container (12) to be inspected detected by the detection device (14) from the spectrum of the optical watermark diffuse impurities of the container (12).

14. Method according to any one of claims 11 to 13, wherein, in the method step of evaluation, the evaluation device (16) concludes by means of a frequency-analytical procedure from a deviation of the frequency spectrum of the image of the container (12) to be inspected detected by the detection device (14) in a plurality of successive images from the spectrum of the optical watermark that there is an impurity or fault in optical components (10, 14, 22, 24) of the inspection device in the optical path (20) between the radiation source (10) and the detection device (14).

15. Method according to any one of claims 11 to 14, wherein, in the method step of evaluation, the evaluation device (16) evaluates portions of the image detected by the detection device (14), wherein the evaluation device (16) compares the frequency spectrum of the portion with the frequency spectrum of the watermark, and wherein, in the case of a deviation of the frequency spectrum of an analysed portion, the evaluation device (16) concludes that there is an impurity or fault in the optical path (20) between the radiation source (10) and the detection device (14).

## Revendications

1. Dispositif d'inspection de contenants (12) pour rechercher des impuretés, comprenant :
- une source de rayonnement (10), la source de rayonnement (10) étant conçue pour émettre un rayonnement, qui traverse un contenant (12) à examiner,
- un système de détection (14), qui est conçu pour détecter le rayonnement qui a été émis par la source de rayonnement (10) et qui a traversé le contenant (12), et
- un système d'évaluation (16), qui est conçu pour évaluer le rayonnement détecté par le système de détection (14),
dans lequel un élément d'identification (18), comportant un filigrane optique, est disposé dans le chemin optique (20) entre la source de rayonnement (10) et le système de détection (14), le système d'évaluation (16) étant conçu pour évaluer le filigrane dans l'image détectée par le système de détection (14).

2. Dispositif selon la revendication 1, dans lequel l'élément d'identification (18) est disposé entre la source de rayonnement (10) et le contenant (12) à examiner.

3. Dispositif selon la revendication 1, dans lequel l'élément d'identification (18) est disposé entre le contenant (12) à examiner et le système de détection (14).

4. Dispositif selon l'une des revendications précédentes, dans lequel un premier élément d'identification (18), comportant un premier filigrane optique, est disposé dans le chemin optique (20) entre la source de rayonnement (10) et le contenant (12) à examiner, et un second élément d'identification (18), comportant un second filigrane optique, est disposé dans le chemin optique (20) entre le contenant (12) à examiner et le système de détection (14).

5. Dispositif selon l'une des revendications précédentes, dans lequel le filigrane optique est conçu pour ne pas influencer ou seulement influencer de manière insignifiante la détection d'impuretés du contenant (12) à examiner par le système d'évaluation (16), et dans lequel le filigrane est conçu de telle manière que des impuretés ou des défauts de composants optiques (10, 14, 22, 24) du dispositif d'inspection dans le chemin optique (20) entre la source de rayonnement (10) et le système de détection (14) peuvent être détectés par le système d'évaluation (16).

6. Dispositif selon l'une des revendications précédentes, dans lequel le filigrane comporte des motifs constitués de lignes ou des motifs constitués de points.

7. Dispositif selon l'une des revendications précédentes, dans lequel le filigrane comporte, dans le spectre de fréquence du filigrane, des fréquences appropriées dans une bande de fréquence fixe.

8. Dispositif selon l'une des revendications précédentes, dans lequel le spectre de fréquence du filigrane est choisi de telle manière que la fréquence la plus basse dans le spectre de fréquence du filigrane est supérieure à la fréquence la plus haute à prévoir dans le spectre de fréquence d'une impureté d'un contenant (12) à examiner.

9. Dispositif selon l'une des revendications précédentes, dans lequel le spectre de fréquence du filigrane est choisi de telle manière que la fréquence la plus haute dans le spectre de fréquence du filigrane est inférieure à la fréquence maximale détectable sans artéfacts par le système de détection (14).

10. Dispositif selon l'une des revendications précédentes, dans lequel le spectre de fréquence du filigrane est choisi de telle manière que le spectre de fréquence du filigrane est atténué ou détruit par des impuretés diffuses dans le chemin optique (20) entre la source de rayonnement (10) et le système de détection (14).

11. Procédé d'inspection de contenants (12) pour rechercher des impuretés, le procédé comprenant les étapes de procédé suivantes :
- mise à disposition d'une source de rayonnement (10), la source de rayonnement (10) étant conçue pour émettre un rayonnement, qui traverse un contenant (12) à examiner,
- mise à disposition d'un système de détection (14), qui est conçu pour détecter le rayonnement qui a été émis par la source de rayonnement (10) et qui a traversé le contenant (12),
- mise à disposition d'un système d'évaluation (16), qui est conçu pour évaluer le rayonnement détecté par le système de détection (14), et
- disposition, dans le chemin optique (20) entre la source de rayonnement (10) et le système de détection (14), d'un élément d'identification (18), comportant un filigrane optique,
- évaluation, par le système d'évaluation (16), du filigrane dans l'image détectée par le système de détection (14).

12. Procédé selon la revendication 11, dans lequel, lors de l'étape de procédé de l'évaluation, le système d'évaluation (16) conclut, par un procédé d'analyse de fréquence, à partir d'une différence entre le spectre de fréquence de l'image détectée par le système de détection (14) du contenant (12) à examiner et le spectre du filigrane optique, à une impureté ou un défaut dans le chemin optique (20) entre la source de rayonnement (10) et le système de détection (14).

13. Procédé selon la revendication 11 ou 12, dans lequel, lors de l'étape de procédé de l'évaluation, le système d'évaluation (16) conclut, par un procédé d'analyse de fréquence, à partir d'une différence entre le spectre de fréquence de l'image détectée par le système de détection (14) du contenant (12) à examiner et le spectre du filigrane optique, à des impuretés diffuses du contenant (12).

14. Procédé selon l'une des revendications 11 à 13, dans lequel, lors de l'étape de procédé de l'évaluation, le système d'évaluation (16) conclut, par un procédé d'analyse de fréquence, à partir d'une différence entre le spectre de fréquence de l'image détectée par le système de détection (14) du contenant (12) à examiner, dans plusieurs images successives, et le spectre du filigrane optique, à une impureté ou un défaut de composants optiques (10, 14, 22, 24) du dispositif d'inspection dans le chemin optique (20) entre la source de rayonnement (10) et le système de détection (14).

15. Procédé selon l'une des revendications 11 à 14, dans lequel, lors de l'étape de procédé de l'évaluation, le système d'évaluation (16) évalue des parties de l'image détectée par le système de détection (14), le système d'évaluation (16) comparant le spectre de fréquence de la partie avec le spectre de fréquence du filigrane, et le système d'évaluation (16) concluant, lors d'une différence du spectre de fréquence d'une partie analysée, à une impureté ou un défaut dans le chemin optique (20) entre la source de rayonnement (10) et le système de détection (14).
